# EUROPÄISCHE PATENTSCHRIFT

(11) **EP 2 596 254 B1**
(45) Veröffentlichungstag und Bekanntmachung des Hinweises auf die Patenterteilung: **21.05.2014**
(21) Anmeldenummer: 11732416.0
(22) Anmeldetag: 07.07.2011
(51) Int. Cl.: F16B 37/08

(54) **MUTTER UND KOMBINATION EINES BOLZENTEILS MIT EINER MUTTER**
NUT AND COMBINATION OF A BOLT PART AND A NUT
ÉCROU ET ASSOCIATION D'UNE PARTIE DE GOUJON AVEC UN ÉCROU

(30) Priorität: 19.07.2010 DE 102010036482
(43) Veröffentlichungstag der Anmeldung: 29.05.2013
(60) Teilanmeldung: 14153016.2
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2011/061475
(87) Internationale Veröffentlichungsnummer: WO 2012/019832

(56) Entgegenhaltungen:
- EP-A1- 0 273 863
- GB-A- 692 041
- GB-A- 2 140 888
- US-A- 4 781 507

## Beschreibung

Die Erfindung betrifft eine Mutter nach den Merkmalen des Oberbegriffes des Anspruchs 1 und eine Kombination eines Bolzens mit einer Mutter nach den Merkmalen des Oberbegriffes des Anspruchs 8.

Eine derartige Mutter ist beispielsweise aus der US 2009/0226281A1 bekannt. Bei der bekannten Mutter sind in dem ersten Teil über einen Teil des Umfangs sich erstreckende Gewinde-Teilstücke aufgenommen, wobei die Gewinde-Teilstücke relativ zu dem ersten Teil beweglich, vornehmlich vertikal beweglich, angeordnet sind. Ein zweites Teil bildet einen Gegenanschlag für eine auf die Gewinde-Teilstücke wirkende Druckfeder. Die bekannte Mutter kann auf einen Gewindebolzen aufgeschoben werden, wobei die zurückweichenden Gewinde-Teilstücke ein Überlaufen des Gewindes ermöglichen. Wenn sodann die Mutter gedreht wird, greifen die Gewinde-Teilstücke in das Gewinde des Bolzens ein und die Mutter kann festgezogen werden. Eine weiter vorgesehene, drehbeweglich mit dem ersten Teil verbundene Unterlegscheibe, die zudem mit einer formschlüssig an der Mutter festgelegten Federkammer verbunden ist, erbringt zufolge Spannung der Feder beim Anziehen der Mutter und Aufliegen der Unterscheibe auf einem zu spannenden Gegenstand eine ständige Vorspannung der Mutter in Verschlussrichtung, so dass einem Lösen entgegengewirkt ist.

Mutter-Sicherungssysteme sind auch in weiteren Ausgestaltungen bekannt. Es wird beispielsweise auf die DE 197 01 371 B4, die EP 2 128 461 A1, die DE 198 25132 A1 und die FR 2 762 367 A1 verwiesen.

Derartige Muttern und Kombinationen von Muttern mit Bolzenteilen sind weiter aus US 4,781,507 A1 und der GB 692041 A bekannt. Beim Gegenstand der genannten US-Schrift sind zwei mit Gewindegängen versehene Mutterteile frei drehbar zueinander vorgesehen. Darüber hinaus ist ein keine Profilierung aufweisendes Einführteil drehbar zu den genannten Gewindeteilen vorgesehen. Die Drehbarkeit des ohne Profilierung ausgebildeten Teils zu einem Gewindeteil ist unbegrenzt möglich. Die Verdrehstellung ist lediglich zwischen den Gewindeausformungen aufweisenden Teilen sicherbar.

Der in die Mutter einzuführende Bolzen ist bis an sein freies Ende mit einer Gewindeausformung versehen.

Aus der genannten britischen Schrift ist eine Mutter bekannt, in welche ein Teil einlegbar ist, das innenseitig an dieser Mutter drehbegrenzend verrastbar ist und eine Öffnung aufweist, die profillos ausgebildet ist und durch welche ein Bolzen hindurchgesteckt werden kann. Weiter kann in die Mutter ein Gewindeteil, das weiter auch ein Außengewinde aufweist, eingedreht werden. Zum Lösen können die Teile nur zusammen herausgedreht werden.

Ausgehend von dem genannten Stand der Technik beschäftigt sich die Erfindung mit der Aufgabe, eine Mutter anzugeben, die schnell auf einen Gewindebolzen aufbringbar ist und bei einfachem Aufbau eine größere Sicherheit gegen Abziehen von dem Gewindebolzen ermöglicht. Zugleich soll eine Kombination aus einem Bolzenteil und einer Mutter angegeben werden, die sicher miteinander verbindbar sind.

Die genannte Aufgabe ist zunächst beim Gegenstand des Anspruches 1 gelöst, wobei darauf abgestellt ist, dass das zweite Teil relativ zu dem ersten Teil um die Drehachse winkelbegrenzt drehbar ist, die Teile in der Verdrehstellung formschlüssig zueinander gesichert sind und zur Aufhebung der Verdrehstellung auf ein die Verdrehung sicherndes Teil einzuwirken ist. Hinsichtlich der genannten Kombination ist die Aufgabe durch den Gegenstand des Anspruches 8 gelöst, wobei darauf abgestellt ist, dass der Bolzen zunächst, in Aufsetzrichtung der Mutter, einen Einführabschnitt aufweist, der frei von Profilierungen ist, wobei die axiale Erstreckung dieses Einführabschnittes an die axiale Erstreckung des zweiten Teils angepasst ist.

Aufgrund der unrunden Öffnungskontur des zweiten Teils kann ein Bolzen, jedenfalls an seinem freien Einführungsende, eine hierauf abgestimmte Kontur aufweisen. Die gegebenenfalls mit Spiel ineinander passend vorgesehenen Konturen des genannten Bolzens und des zweiten Teils bewirken bei einem Verdrehen der Mutter in der angesprochenen Weise, dass das zweite Teil sich nicht mitdreht. Dies kann in vielfältiger Hinsicht genutzt sein. In einfachster Weise etwa als Indikator, beispielsweise farblich oder geometrisch weiter ausgestaltet, der dem Nutzer anzeigt, dass die zur Hinderung eines Abziehens erforderliche Verdrehung der Mutter vorgenommen ist. Auch ohne gesonderte Ausbildung kann die Relativdrehung des ersten und zweiten Teils zueinander erkannt werden. Bevorzugt ist die Profilierung mit dem ersten Teil fest verbunden bzw. weiter bevorzugt einstückig hiermit ausgebildet.

Hiermit ist eine einfach auf einen Bolzen aufzubringende Sicherungsmutter geschaffen. Zufolge Verdrehen der Mutter ist die Abzugssicherung gegeben, wobei zugleich die unrunde Öffnungskontur das zweiten Teils dazu genutzt sein kann, dass das zweite Teil sich nicht mitdreht und hieraus Nutzen gezogen werden kann.

In Bezug auf die Kombination kann die Mutter in einfacher Weise auf das Bolzenteil aufgeschoben werden und dann so verdreht werden, dass die Profilierungen der Mutter und des Bolzenteils ineinandergreifen, wobei bei dieser Drehung das zweite Teil sich nicht mit dem ersten Teil dreht, so dass in allgemeinster Hinsicht, wie weiter oben schon angegeben, das zweite Teil als Indikator dafür nutzbar ist, dass die Mutter auf dem Bolzenteil gesichert ist, nämlich die Profilierungen ineinandergreifen und ein Abziehen der Mutter von dem Bolzen ohne weitere Drehung oder Rückdrehung nicht möglich ist.

Im Hinblick auf die mangelnde Drehbarkeit des Bolzenteils in der Öffnung des zweiten Teils kann eine Drehung um wenige Winkelgrade, beispielsweise 0,1 bis 20 Winkelgrade, gleichwohl möglich sein. Wesentlich ist, dass es zufolge der mangelnden Drehbarkeit zu einem Mitschleppen des zweiten Teils durch den Bolzen bei Drehung des Bolzens in die Mutter kommt.

Im Weiteren ist zunächst die Mutter beschrieben und sodann in weiterer Einzelheit die genannte Kombination einer Mutter mit einem Bolzenteil. Die Beschreibung der Mutter, auch vorstehend, hat in beiden Fällen Bedeutung, da alle beschriebenen Ausgestaltungen der Mutter sowohl in der genannten Kombination wie auch bei der Mutter alleine verwirklicht sein können. Entsprechend hat auch die Beschreibung des Bolzenteils jedenfalls zur Erläuterung der Mutter auch unabhängig von der genannten Kombination Bedeutung. Die hier wesentlichen Gestaltungen der Mutter, betreffend insbesondere die Profilierung und die Zuordnung von erstem und zweiten Teil und deren Gestaltung, können auch in einem Plattenteil ausgebildet sein, das drehbar sein kann aber auch feststehend vorgesehen sein kann. In letzterem Fall wird dann in der Regel nur der Bolzen relativ zu dem Plattenteil gedreht.

Dass das zweite Teil relativ zu dem ersten Teil um die Drehachse winkelbegrenzt drehbar ist, trägt der Tatsache Rechnung, dass auf dem Bolzenteil in Umfangsorientierung die Profilierung auch nur teilweise ausgebildet ist. So kann die Winkelbegrenzung derart angepasst sein, dass sich eine möglichst vollständige Überdeckung der Profilierungen im verdrehten Zustand des ersten Teils ergibt.

In der Lösestellung ist die gemeinsame Öffnungskontur, d. h. die sich bei dieser Übereinanderlage ergebende Gesamt-Öffnungskontur des ersten und zweiten Teils, entsprechend einer Umfangskontur des Bolzens oder zumindest teilweise größer als eine Umfangskontur des Bolzens in seinem mit der Profilierung versehenen Bereich. Sie kann alternativ auch kleiner sein, hervorgerufen durch die Öffnungskontur des zweiten Teils. Dies ist beispielsweise eine Ausbildung, wenn der Bolzen an seinem freien Ende, von welchem aus die Mutter aufgesetzt wird, zunächst eine kleinere Kontur aufweist, über welche die Öffnung des ersten Teils ohne Weiteres hinweggeschoben werden kann, welche aber weiter in die dann kleinere Öffnungskontur des zweiten Teils einpasst, wobei das zweite Teil aber nicht über diese kleinere Kontur des Bolzens weitergeschoben werden kann.

In einer weiteren Ausgestaltung ist vorgesehen, dass die Teile in der Verdrehstellung formschlüssig zueinander gesichert sind. Weiter bevorzugt zufolge einer Verrastung. Hierbei ist die Verdrehstellung nicht durch ein ledigliches, gegebenenfalls auch kraftbetontes, Verdrehen der Teile zueinander aufhebbar, sondern es muss beispielsweise auf ein die Verrastung sicherndes Teil, beispielsweise einen Knopf, eingewirkt werden, beispielsweise ein Anheben oder Andrücken oder auch Drehen eines die Verrastung sichernden Teiles erfolgt. Es kann auch vorgesehen sein, dass nur eine Einmal-Verrastung durchgeführt werden kann. Ohne besondere Maßnahmen, beispielsweise eine aufwändige Demontage, kann dann die Verriegelungsstellung nicht mehr aufgehoben werden.

Weiter ist auch bevorzugt, dass die Teile in ihre unverdrehte Stellung, die Lösestellung, vorgespannt sind. Dies sichert die Möglichkeit, eine Mutter jeweils frei auf einen Bolzen aufschieben zu können ohne zuvor auf eine hierfür geeignete Drehstellung der Teile zueinander achten zu müssen. Wenn im Zuge eines Lösens der Mutter von dem Bolzen die Verdrehstellung verlassen wird, ergibt sich selbsttätig ein Einnehmen der unverdrehten Stellung der Teile, d. h. der Lösestellung, zueinander.

Darüber hinaus ist bevorzugt, dass die Öffnungskontur des zweiten Teils in senkrechter Projektion zumindest teilweise radial innen bezüglich der Profilierung des ersten Teils verläuft. Die unrunde Gestaltung ist insbesondere im Überdeckungsbereich zu der Profilierung des ersten Teils, bezogen auf die Lösestellung, gegeben. In Überdeckung zu einem nicht profilierten Umfangsabschnitt des ersten Teils ist in der Lösestellung die Öffnungskontur des zweiten Teils bevorzugt an einer Kreisform orientiert. Hierbei kann die Kreisform gebildet sein auf Basis des größten Öffnungsmaßes der Öffnungskontur der zweiten Öffnung, bezogen auf eine die Öffnungskontur durchsetzende Mittelachse oder auf eine bei Aufsetzen der Mutter auf einen Bolzen den Bolzen durchsetzende Drehachse. Dieses größte Öffnungsmaß kann entsprechend das Durchmessermaß der Kreisform sein. Ergänzend oder alternativ kann vorgesehen sein, dass die Öffnungskontur des zweiten Teils in ihrer größten Erstreckung eine Abmessung aufweist, welche in senkrechter Projektion eine bezüglich der Profilierung des ersten Teils bis zur Profilierungsspitze reichendes Durchmessermaß der Mutter übertrifft und in ihrer kleinsten Erstreckung eine Abmessung, welche geringer ist als das genannte Durchmessermaß.

Weiter bevorzugt setzt sich als die Kontur des zweiten Teils teilweise aus einem an einer Kreisform orientierten Abschnitt und teilweise aus einem nicht an einer Kreisform orientierten Abschnitt, insofern bevorzugt aus den Langseiten eines Rechteckabschnittes, zusammen.

Das erste und das zweite Teil sind in Axialrichtung zumindest teilweise und jedenfalls hinsichtlich ihrer Eingriffsabschnitte hintereinander angeordnet. Der Eingriffsabschnitt des zweiten Teils ist die konturierte Öffnung, die sich real über eine gewisse Höhe, in Axialrichtung der Drehachse, erstreckt. Der Eingriffsabschnitt des ersten Teils ist der mit der Profilierung versehene Teil der Öffnung. Die Profilierung erstreckt sich über eine gewisse Höhe in Achsrichtung der Drehachse. Es sind bevorzugt eine Mehrzahl von Profilierungen, beispielsweise auch Gewindegänge, in Axialrichtung der Drehachse hintereinander ausgebildet. Beispielsweise drei oder mehr bis hin zu hundert oder tausend Profilierungen hintereinander. Dies betrifft sowohl die Profilierungen der Mutter wie auch die Profilierungen des Bolzens. Das erste und das zweite Teil können sich auch in Überdeckung zueinander befinden. Das eine Teil kann in dem anderen aufgenommen sein. Bevorzugt ist das zweite Teil in dem ersten Teil aufgenommen. Bevorzugt ist auch, dass die Erstreckung des zweiten Teils in Richtung der Drehachse kürzer ist als die Erstreckung des ersten Teils. Dies betrifft in weiterer Einzelheit auch die Erstreckung der Innenfläche des ersten Teils, die mit einer Profilierung ausgebildet ist. Weiter bevorzugt beträgt die Erstreckung des Eingriffsabschnitts des zweiten Teils etwa 1/20 bis 1/2 der Erstreckung des Profilierungsabschnittes des ersten Teils in Achserichtung der Drehachse.

Im Falle der Verrastbarkeit der Teile zueinander ist zur Lösung der Verraststellung bevorzugt ein relativ zu dem ersten und/ oder zweiten Teil bewegliches Löseteil vorgesehen. Das Löseteil kann beispielsweise quer zur Erstreckungsrichtung der Drehachse zu betätigen sein. Das Löseteil kann alternativ oder ergänzend auch durch Drehen um die Drehachse zu betätigen sein.

Die Zusammenwirkung der Mutter mit dem Bolzen ist insbesondere auch derart vorgesehen, dass der Bolzen zunächst, in Aufsetzrichtung der Mutter, bevorzugt einen Abschnitt, einen Einführabschnitt, aufweist, der frei von Profilierungen ist. Eine größte Querschnittsabmessung ist jedoch bevorzugt größer als eine größte Querschnittsabmessung des Bolzens im Bereich eines Profilierungsgrundes, in dem Abschnitt des Bolzens, in dem Profilierungen ausgebildet sind. Weiter bevorzugt ist die axiale Erstreckung dieses profilfreien Abschnittes bzw. des Einführabschnittes mindestens an die axiale Erstreckung der Öffnung des zweiten Teils angepasst. Beim Aufsetzen der Mutter auf den Bozen hat dies zur Folge, dass die Mutter erst in eine Eingriffsstellung verdreht werden kann, wenn sie hinsichtlich ihres Profilierungsabschnittes vollständig in Überdeckung zu der Profilierung des Bolzens ist. Denn zuvor kann wegen dann eintretender Kollision der an der Innenfläche der Mutter ausgebildeten Umfangsprofilierung mit dem profilierungsfreien, aber entsprechend durchmessergroßen Bereich des Bolzens, keine Verdrehung stattfinden. Wenn die Verdrehung stattfinden kann, ist dann aber auch bevorzugt bereits das zweite Teil über den genannten profilierungsfreien Bereich des Bolzens übergefahren, so dass auch zugleich sichergestellt ist, dass die Relativverdrehung der Teile zueinander erfolgt. Letzteres ist dadurch bevorzugt erreicht, dass sich unmittelbar an, in Achsrichtung gesehen, das Ende der Profilierung der Mutter die zweite Öffnung des zweiten Teils anschließt.

Die genannte Profilierung an der Mutter und/ oder dem Bolzen kann insbesondere in Form von einem oder mehreren Gewindegängen ausgebildet sein.

Im Falle von Gewindegängen ist insbesondere auch bevorzugt, dass das Gewinde ein Linksgewinde ist. Hiermit lässt sich beim Einnehmen der Verdrehstellung sicherstellen, dass die Verdrehung immer ohne vorzeitiges Klemmen des mittels der Mutter beispielsweise an dem Bolzen zu sichernden Gegenstandes ermöglicht ist. Denn die Mutter bewegt sich zufolge des Linksgewindes beim Einnehmen der Drehstellung um ein, wenn auch geringes, Maß von dem zu sichernden Gegenstand jeweils weg. Dies ist jedenfalls dann vorteilhaft, wenn der auf dem Bolzen gesicherten Mutter die Funktion eines Anschlagteiles zukommt. Soll die Mutter aber beispielsweise als Feststellteil dienen, kann sich auch eine anziehende Wirkung beim Verdrehen empfehlen, also ein Rechtsgewinde. Bei Ausbildung einer Profilierung kann auch ein Verlauf der bevorzugt mehrfach in Richtung der Drehachse übereinander vorgesehenen Profilierungsausformungen vorgesehen sein, der beim Verdrehen der Mutter keine Bewegung der Mutter in Richtung der Drehachse bewirkt.

In weiterer Einzelheit ist auch bevorzugt, dass die Profilierung des ersten Teils, gegebenenfalls die Gewindeausformungen, nur über zwei Drittel oder weniger der Innenfläche des ersten Teils der Mutter ausgebildet ist. Weiter bevorzugt sind, insbesondere nur, zwei Profilierungsabschnitte in Umfangsrichtung voneinander getrennt, so dass auch - bevorzugt: nur - zwei profilierungsfreie Bereiche ausgebildet sind. Die Bereiche mit Profilierung und ohne Profilierung sind darüber hinaus bevorzugt jeweils deckungsgleich sich gegenüberliegend ausgebildet. Weiter bevorzugt sind die Bereiche jeweils entsprechend einer Zylinderfläche ausgebildet. Die Profilierung weist zufolge der Unterbrechungen in Umfangsrichtung für jeden einer bevorzugten Mehrzahl von übereinander angeordneten Einzelprofilierungen einen Anfangsbereich und ein Endbereich auf. Bevorzugt sind die Anfangs- und/oder Endbereiche gerundet oder abgeflacht ausgebildet, weiter bevorzugt auch die Endbereiche der korrespondierenden Profilierung an dem Bolzen oder auch nur die Endbereiche der genannten Profilierung an dem Bolzen. Insbesondere dann, wenn die Profilierung aus Gewindegängen bzw. Gewindegang-Abschnitten besteht. Die Rundung oder Abflachung ist bevorzugt eine Spitzenverrundung oder -abflachung, so dass sich ein Einweisereffekt ergibt. Die Verrundung kann beispielsweise dadurch erreicht sein, dass eine Profilierungs- oder spezieller eine Gewindegang-Spitze durch ein "Abtauchen" der Profilierung bzw. des Gewindegangs in Erstreckungsrichtung der Profilierung bzw. des Gewindegangs in das umgebende Material gegeben ist.

Die Mutter kann an ihrer Außenfläche eine übliche Konturierung besitzen. Sie kann auch im Grundriss bezüglich der Außenfläche rund gestaltet sein.

Weiter ist bevorzugt, dass das Löseteil in eine die Verrastungsstellung kennzeichnende Ausfahrstellung vorgespannt ist. Entsprechend ist die Verrastungsstellung bei Druck auf das oder Bewegung des Löseteils gegen Federkraft, die sich durch Eindrücken oder Bewegen des Löseteils ergibt, zu lösen. So kann eine selbsttätige Verrastung bei Erreichen eines vorgegebenen Verdrehwinkels zwischen dem ersten und dem zweiten Teil erreicht werden. Ein Herausfahren oder Herausspringen des Löseteils relativ zu einer äußeren Fläche, insbesondere Umfangsfläche, der Mutter, erbringt überdies eine gewünschte Indikation für ein Erreichen der gesicherten Raststellung. Alternativ kann auch vorgesehen sein, dass zum Erreichen der Verrastung aktiv eine Bewegung eines Rastteils, beispielsweise ein Eindrücken oder Herausziehen, vorgenommen werden muss.

Es kann auch vorgesehen sein, dass mehrere Raststellungen für unterschiedliche Verdrehwinkel des ersten und des zweiten Teils vorgesehen sind.

Das Bolzenteil weist bevorzugt einen rechteckigen Querschnitt auf. Hierbei sind zwei gegenüberliegende Flachseiten bevorzugt profilierungs- bzw. gewindefrei ausgebildet während zwei weitere gegenüberliegende Seiten des im Wesentlichen rechteckigen Querschnitts gerundet und mit Gewinde oder Profilierung ausgebildet sind.

Die Öffnungskontur des zweiten Teils der Mutter ist entsprechend hieran angepasst auch im Wesentlichen rechteckig, mit zwei gerade verlaufenden und zwei abgerundet verlaufenden, bevorzugt auch jeweils sich gegenüberliegend ausgebildeten, Begrenzungslinien. Bevorzugt sind zwei Langseiten und zwei Kurzseiten gegeben. Weiter bevorzugt ist eine gerade verlaufende Begrenzungslinie an der Langseite ausgebildet.

Weiter ist bevorzugt, dass in der unverdrehten Stellung die Profilierung des ersten Teils in einer axialen Projektion sich zumindest teilweise radial außerhalb bezüglich einer Konturlinie, gegebenenfalls bezüglich der gerade verlaufenden Begrenzungslinie, befindet. Insgesamt ist bevorzugt, beim ersten Teil aufgrund der Profilierung, dass beide Öffnungen eine unrunde Öffnungskontur aufweisen, wobei diese Öffnungskonturen zueinander unterschiedlich sind. Weiter bevorzugt sind auch die Abweichungen von einer, bezogen auf ein größtes Öffnungsmaß, kreisförmigen Öffnungskontur bei dem zweiten Teil größer als bei dem ersten Teil. Hierbei ist die Abweichung betragsmäßig zu verstehen. Die Flächenanteile, die bezogen auf eine ideale kreisförmige Öffnungskontur radial außerhalb der Öffnungskontur liegen, sind entsprechend dann bei dem zweiten Teil größer als bei dem ersten Teil.

Die vor- und nachstehend angegebenen Bereiche bzw. Wertebereiche schließen hinsichtlich der Offenbarung auch sämtliche Zwischenwerte ein, insbesondere in 1/10-Schritten, in ihrer jeweiligen Dimension bzw. gegebenenfalls dimensionslos, einerseits zur Eingrenzung der genannten Bereichsgrenzen von unten und/oder oben, alternativ oder ergänzend aber auch im Hinblick auf die Offenbarung eines oder mehrerer singulärer Werte aus einem jeweiligen Bereich.

Nachstehend ist die Erfindung weiter anhand der beigefügten Zeichnung erläutert, die aber lediglich Ausführungsbeispiele darstellt. Hierbei zeigt:
- Fig. 1: eine perspektivische, teilweise in Explosionsart vorgenommene Darstellung eines hydraulischen Verpressgerätes mit einem Bolzenteil, einem an dem Bolzenteil zu sichernden Werkzeug und einer verrastbaren Schnellwechselmutter;
- Fig. 2: eine Ansicht des Bolzenteils mit aufgesetzter Mutter;
- Fig.. 3: einen Querschnitt durch den Gegenstand gemäß Fig. 2, geschnitten entlang der Linie III-III;
- Fig. 4: eine Darstellung gemäß Fig. 3, jedoch bei zueinander verdrehtem ersten und zweiten Teil der Mutter, wobei die Mutter sich in der Verrastungsstellung befindet;
- Fig. 5: eine Darstellung gemäß Fig. 4, jedoch geschnitten im Bereich des Löseteils;
- Fig. 6: einen weiteren Schnitt durch die auf den Bolzen aufgebrachte Mutter, in der Verdrehstellung, geschnitten durch die Gewindebereiche der Mutter;
- Fig. 7: eine Explosionsdarstellung der Mutter und zugehörigem Bolzen;
- Fig. 8: eine Darstellung gemäß Fig. 7, jedoch gesehen von schräg unten;
- Fig. 9: einen Querschnitt durch den Gegenstand gemäß Fig. 2, geschnitten entlang der Linie IX-IX;
- Fig. 10: eine Darstellung gemäß Fig. 9, in der Verdrehstellung;
- Fig. 11: eine Darstellung gemäß Fig. 8, einer weiteren Ausführungsform;

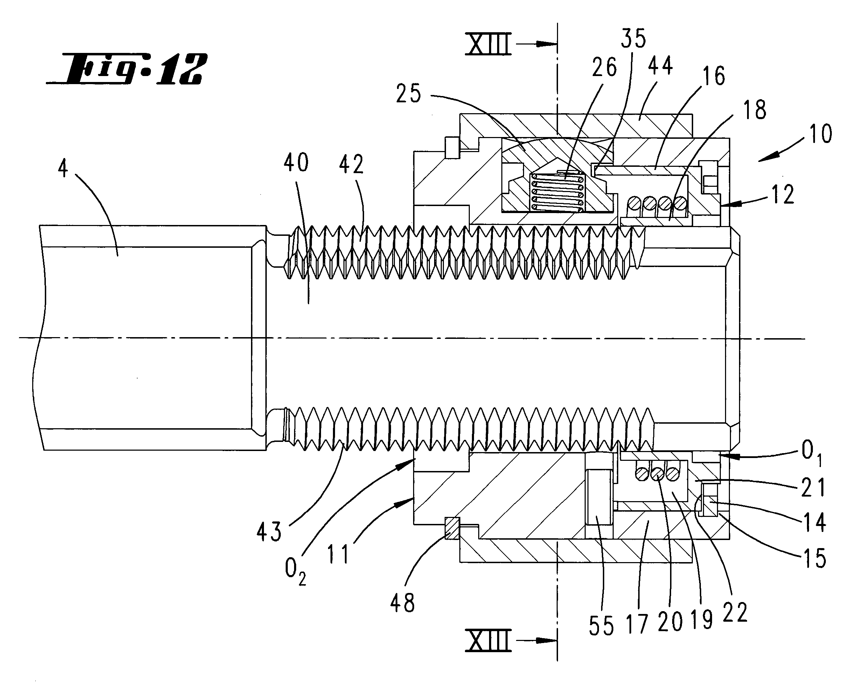

- Fig. 12: einen Querschnitt durch die auf den Bolzen bei der Ausführungsform der Fig. 11 aufgesetzte Mutter, in der Lösestellung;
- Fig. 13: einen Querschnitt durch den Gegenstand gemäß Fig. 12, geschnitten entlang der Linie XIII-XIII;

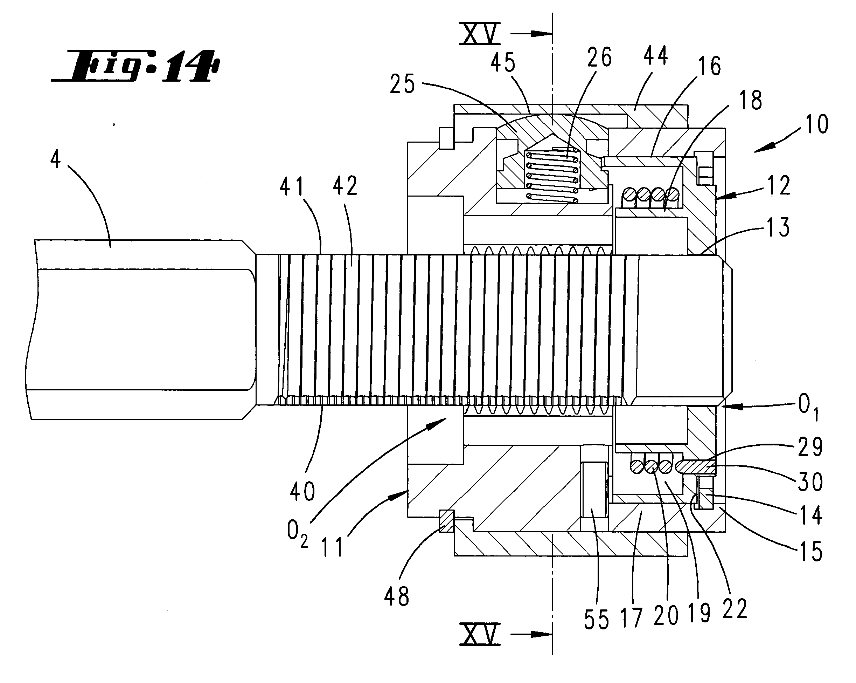

- Fig. 14: eine Darstellung gemäß Fig. 12, in der Verdrehstellung;
- Fig. 15: einen Querschnitt durch den Gegenstand gemäß Fig. 14, geschnitten entlang der Linie XV-XV;
- Fig. 16: eine Darstellung des Bolzens mit einer Herausvergrößerung von Profilierungen bzw. Gewindegängen am Bolzen.

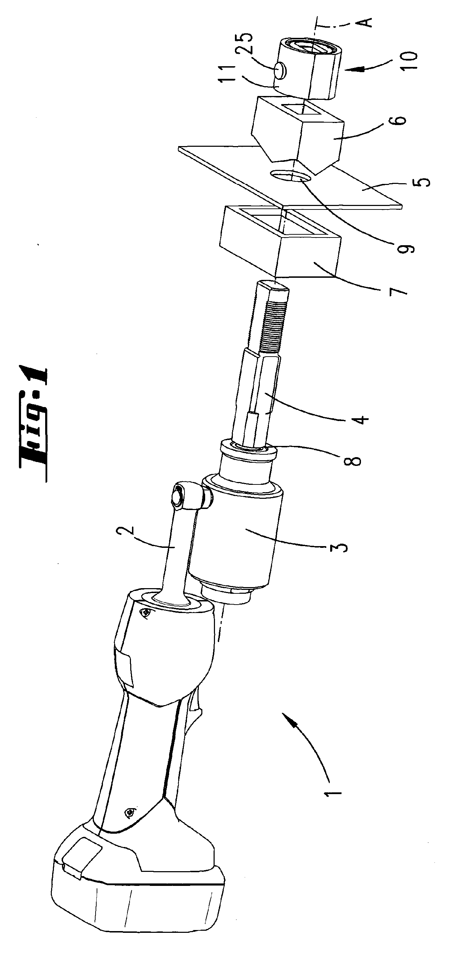

Dargestellt und beschrieben ist, zunächst mit Bezug zu Fig. 1, ein elektrohydraulisches Handgerät 1, das, soweit es hier nicht im Einzelnen dargestellt ist, beispielsweise gemäß der US 7 421 877 B2 ausgebildet ist, wobei jedoch zunächst, anstelle des Arbeitskolbens, der in einem Zylinder beweglich aufgenommen ist, an die auf den Pumpkolben anschließende Druckleitung sich eine frei stehende Hydraulikleitung 2 anschließt, die in den Zylinder 3 mündet, in dem ein hinsichtlich des Arbeitshubes zurücklaufender Kolben angeordnet ist, mit welchem ein Bolzen 4 zurückgezogen werden kann.

Mittels dieses Werkzeuges kann beispielsweise in einem Blech 5 ein Loch gestanzt werden, mittels eines Stanzwerkzeuges 6 und eines Gegenhalters 7. Der Gegenhalter 7 wird entsprechend über den Bolzen 4 geführt und kann auf einer Schulter 8 des Bolzens zum Aufliegen kommen. Sodann wird der Bolzen durch die bereits vorhandene Öffnung 9 in dem Blech 5 geführt und auf der Rückseite des Bleches 5 dann das Werkzeug 6 auf den Bolzen 4 aufgeschoben und schließlich die Mutter 10 aufgeschoben und im aufgeschobenen Zustand dann durch Drehung um eine Bolzenachse verriegelt. Hierbei wird eine Verrastung erzielt, wie nachstehend noch erläutert, wobei dann beispielsweise ein Löseteil 25 ausfährt.

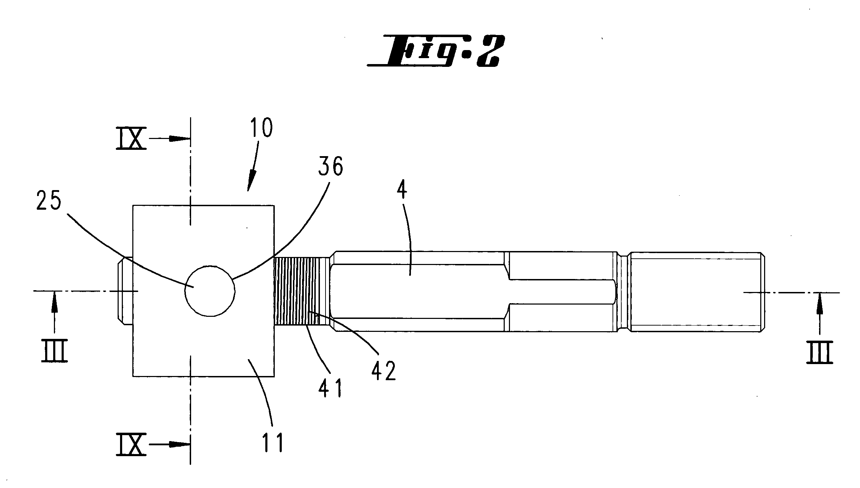

Der verriegelte Zustand der Mutter 10 auf dem Bolzen 4 ist in Fig. 2 dargestellt. Die Mutter 10 befindet sich relativ zu dem Bolzen 4 in der Verdrehstellung.

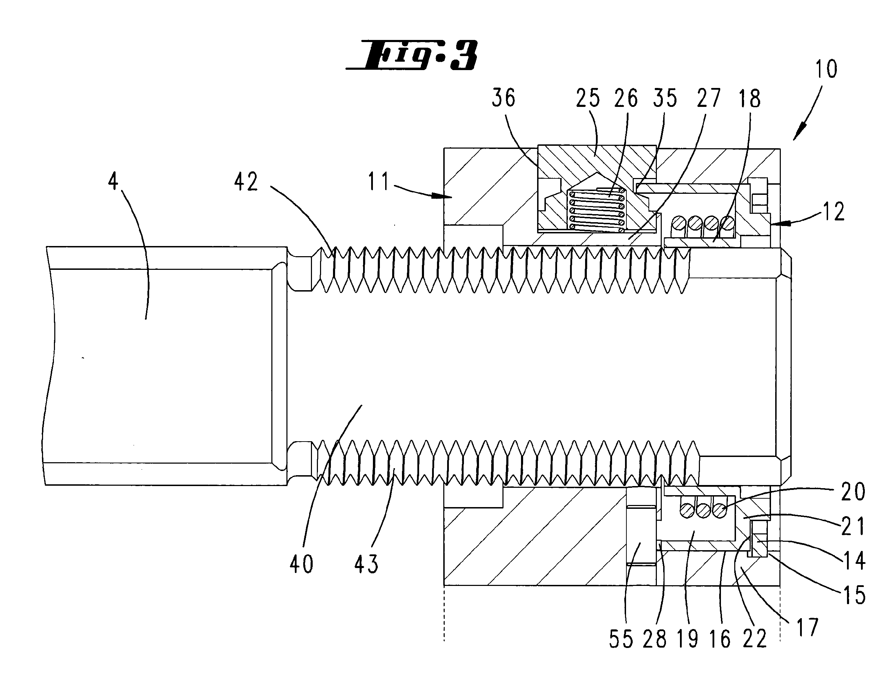

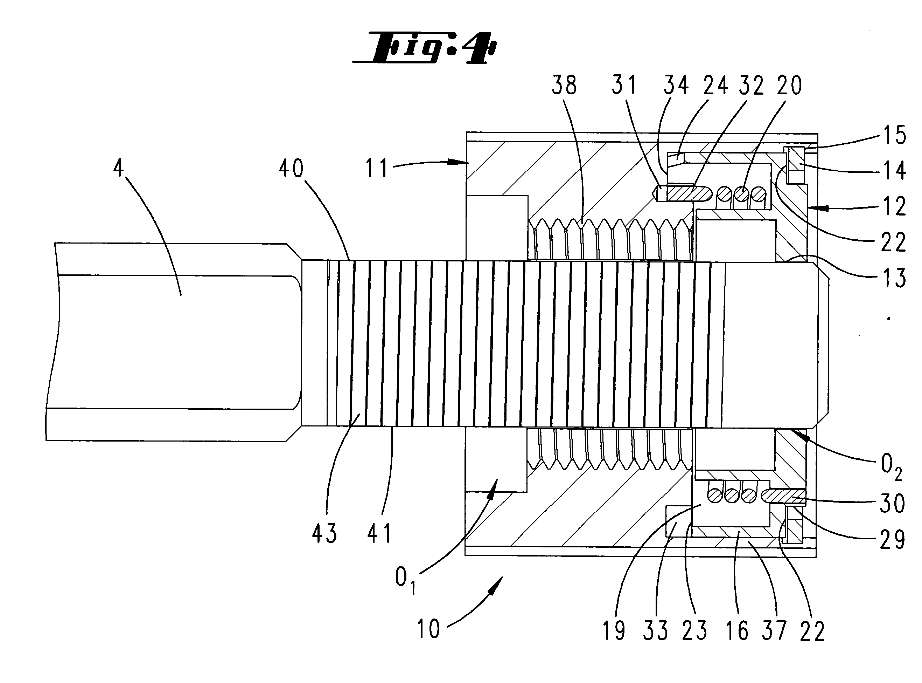

Mit Bezug zu den Fig. 3 bis 10 ist der Aufbau der Mutter und die Verriegelung weiter erläutert. In Fig. 3 ist auch durch gestrichelte Linien angedeutet, dass die im Hinblick auf die Mutter bezogenen Ausgestaltungen auch in einem Plattenteil ausgebildet sein können.

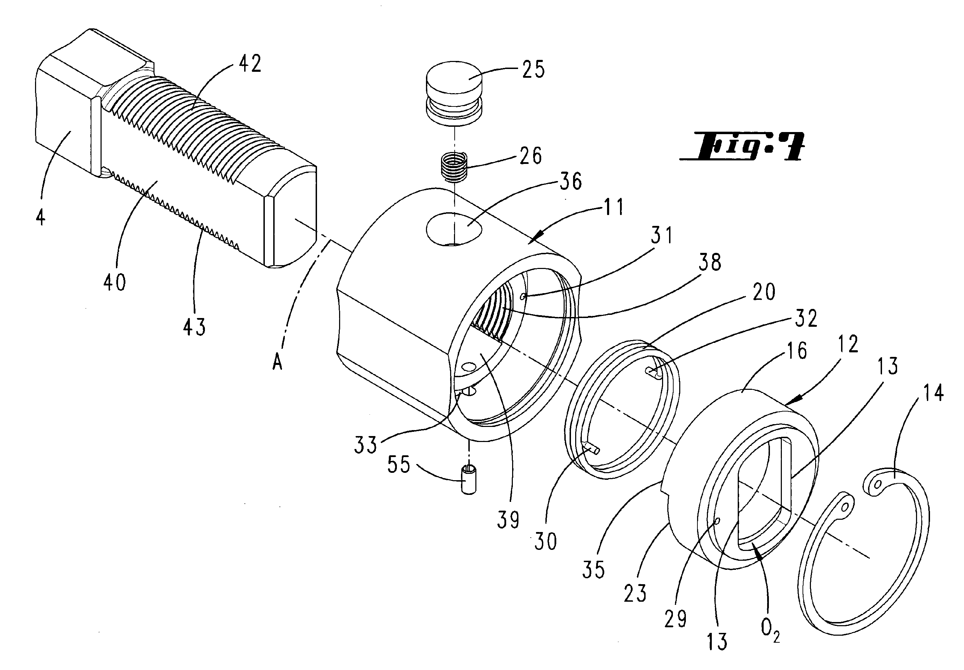

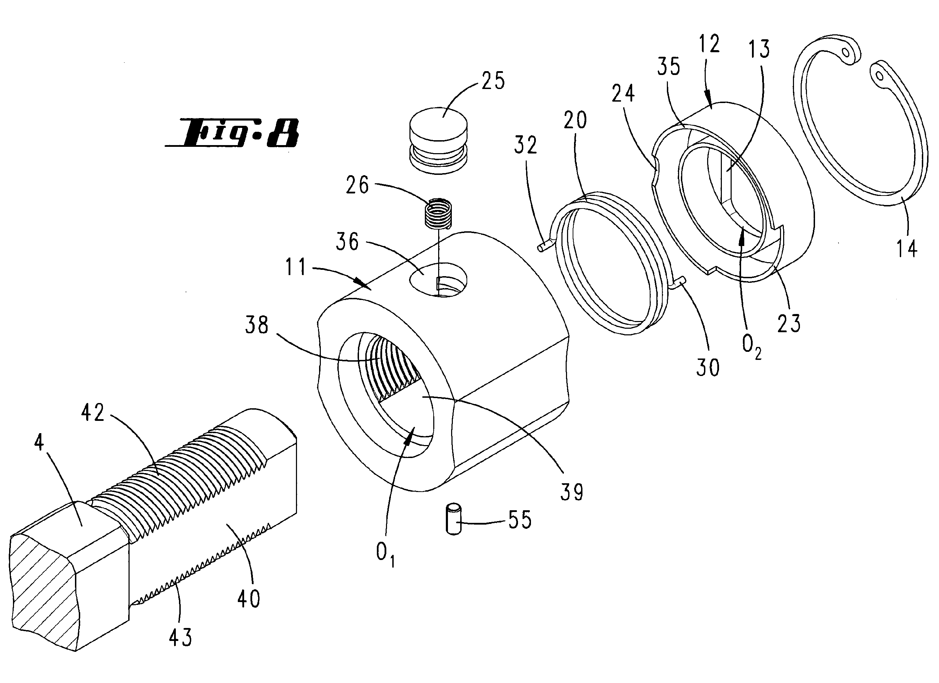

Die Mutter 10 weist zunächst ein erstes Teil 11 auf mit einer durchgehenden ersten Öffnung O₁ (vgl. etwa Fig. 8) und ein zweites Teil 12 mit einer durchgehenden Öffnung O₂ (vgl. hierzu auch Fig. 7).

Die Öffnung O₂ weist eine durch die Randkante 13 begrenzte Öffnungskontur auf. Die Öffnungskontur der zweiten Öffnung O₂ ist unrund. Speziell beim Ausführungsbeispiel ist die Öffnung O₂ mit einer rechteckigen Öffnungskontur ausgebildet, wobei die Langseiten geradlinig ausgebildet sind, die Schmalseiten jedoch konkav verrundet.

Eine Drehachse A durchsetzt beide Öffnungen O₁, O₂. Bevorzugt, und beim Ausführungsbeispiel verwirklicht, ist die Drehachse A die gemeinsame Drehachse des ersten Teils 11 und des zweiten Teils 12. Die Drehachse A ist bevorzugt auf die Mittelachse des ersten Teils 11 und/oder des zweiten Teils 12.

Die Teile 11, 12 sind drehbar miteinander verbunden.

Zur drehbaren Verbindung der beiden Teile 11, 12 ist das zweite Teil 12 in das erste Teil 11 eingesetzt. In weiterer Einzelheit ist eine formschlüssige Halterung des zweiten Teils 12 in dem ersten Teil 11 gegeben. Beim Ausführungsbeispiel bevorzugt durch einen Sprengring 14, der in einen Hinterschnitt 15 des ersten Teils 11 eingreift. Eine Umfangsfläche der Mutter ist, mit Ausnahm gegebenenfalls des Löseteils 25, allein durch die Mutter 11 gebildet.

Das zweite Teil 12 weist eine erste Wandung 16 auf, die sich innerhalb einer Außenwandung 17 des ersten Teils 11 erstreckt. Die erste Wandung 16 sorgt bevorzugt für eine Drehführung des zweiten Teils 12 an dem ersten Teil 11.

Weiter kann, wie beim Ausführungsbeispiel vorgesehen, das zweite Teil 12 eine zweite Wandung 18 aufweisen, die sich bezüglich der ersten Wandung 16 nach radial innen versetzt erstreckt. Die erste Wandung 16 und/oder die zweite Wandung 18 erstrecken sich bevorzugt in Richtung der Achse A, weiter bevorzugt parallel hierzu. Zwischen der ersten Wandung 16 und der zweiten Wandung 18 ist ein nach unten, d. h. beispielsweise dem Profilierungsbereich des ersten Teils 11 zugewandt, offener Zwischenraum 19 belassen. Die erste Wandung 16 und die zweite Wandung 18 sind bevorzugt konzentrisch zueinander und weiter bevorzugt mit jeweils kreisförmigem Grundriss ausgebildet. Die Wände 16 und 18 sind über einen Steg 21 U-förmig verbunden. Der Steg 21 ist oberseitig gestuft ausgebildet. Die Stufe öffnet sich bevorzugt nach radial außen. Bevorzugt sitzt auf einer unteren Stufenfläche 22 der Sprengring 14 auf. Wie sich etwa aus Fig. 8 ergibt, ist die erste Wandung 16 des zweiten Teils 12 unterseitig bevorzugt profiliert. Die erste Wandung 16 weist beispielsweise einen Umfangsausschnitt 23 auf. Weiter vorzugsweise eine Positionsausnehmung 24.

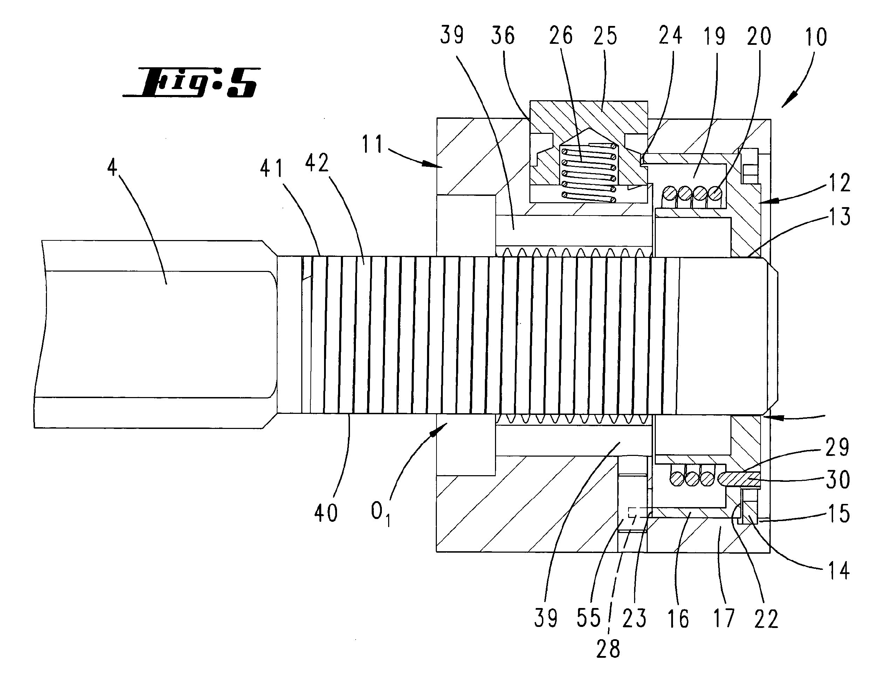

Die Umfangsausnehmung 23 kann zur Winkelbegrenzung der Verdrehbarkeit des zweiten Teils 12 relativ zu dem ersten Teil 11 dienen. Die Positionsausnehmung 24 ermöglicht es bevorzugt dem Löseteil 25 in der Verdrehstellung bzw. Verrastungsstellung aus einer eingefahrenen Stellung gemäß Fig. 3 in die ausgefahrene Stellung gemäß Fig. 5 zu verfahren. Das Löseteil 25 ist hierfür mittels einer Druckfeder 26 gegen eine radial innen in Überdeckung befindliche Wandung 27 des ersten Teils 11 nach außen vorgespannt.

Das Ausfahren des Löseteils 25 in der Verdrehstellung, wodurch die Verrastung gegeben ist, wie beim Ausführungsbeispiel vorgesehen, hat auch den Vorteil eines Indikators. Insbesondere eines taktil erfassbaren Indikators.

Um aus der Verdrehstellung gemäß Fig. 5, in der die Mutter auf dem Bolzen nicht abziehbar gesichert ist, wieder in die Lösestellung gemäß Fig. 3 zu verfahren, muss bei dem Ausführungsbeispiel der Fig. 1 bis 10 unmittelbar durch einen Benutzer das Löseteil 25 nach radial innen gegen die Feder 26 gedrückt werden. Aufgrund der in der Verrastungsstellung gemäß Fig. 5 zufolge einer Spannung der Feder 20 gegebenen Vorspannung der Teile 11 und 12 zueinander in die Lösestellung gemäß Fig. 3 verdreht sich nahezu selbsttätig das erste Teil 11 bei einem Niederdrücken des Löseteils 25 in der Stellung der Fig. 5 relativ zu dem zweiten Teil 12 wieder in die Stellung gemäß Fig. 3.

Die beschränkte Verdrehbarkeit des ersten Teils 11 relativ zu dem zweiten Teil 12 zufolge der Umfangsausnehmung 23 ist weiter bevorzugt durch ein drehfest mit dem ersten Teil 11 verbundenes oder in sonstiger Weise an dem ersten Teil 11 ausgeformtes Anschlagteil 28 gesichert.

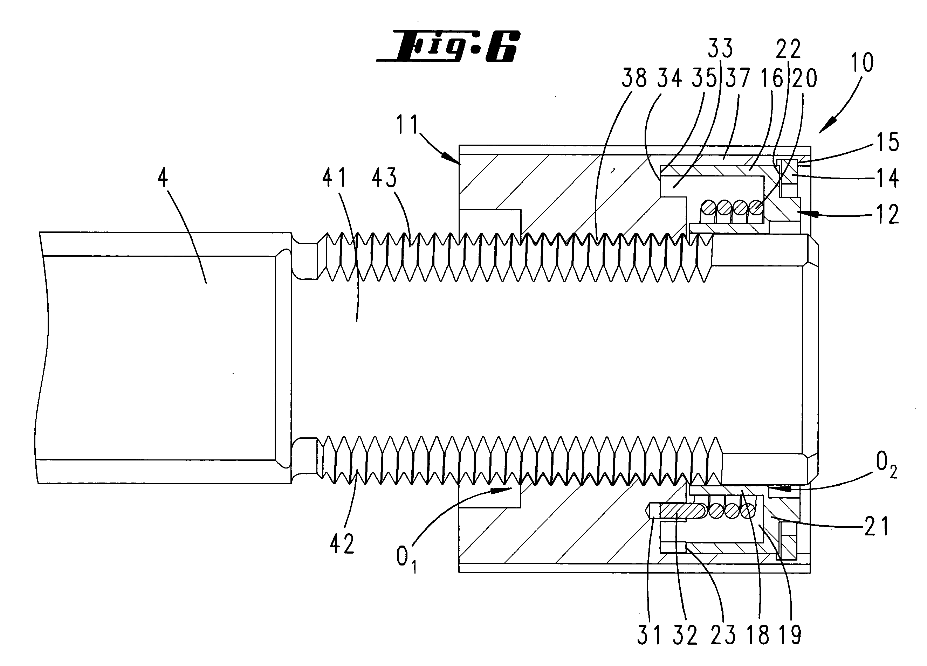

Die Feder 20 ist sowohl an dem ersten Teil 11 wie an dem zweiten Teil 12 gesichert. Bevorzugt ist die Feder 20 einerseits mittels eines in eine Bohrung 29 des zweiten Teils 12 eingreifenden Endes 30 in dem zweiten Teil 12 gesichert und andererseits mittels eines in eine Bohrung 31 des ersten Teils 11 eingreifenden zweiten Endes 32 in dem ersten Teil 11. Wie weiter insbesondere aus Fig. 6 zu entnehmen ist, bildet das erste Teil 11 zugewandt dem zweiten Teil 12 eine ringförmig umlaufende, nach oben Ausnehmung 33 aus. Auf dem ebenflächigen Boden 34 der Ausnehmung 33 stützt sich die Unterfläche 35 der Wandung 16 des zweiten Teiles 12 ab, mit Ausnahme des Bereiches der Umfangsöffnung 23 und der Positionsausnehmung 24.

In die Ausnehmung 33 ragt der beim Ausführungsbeispiel durch einen Zapfen 55 gebildete Anschlag 28.

Die Ausnehmung 33 geht im Bereich des Löseteils 25 in eine Rundungsausnehmung 36 über, welche über den sich oberhalb des Bodens 34 der Ausnehmung 33 anschließende Wandungsbereich 37 des ersten Teils 11 auch durchsetzt. Die Rundungsausnehmung 36 ist mit einer sich radial erstreckenden Mittelachse ausgebildet.

Das erste Teil 11 weist innenseitig eine Profilierung, bevorzugt Gewindeausformungen 38 auf. Es handelt sich um zwei gegenüberliegend ausgebildete Gewindeausformungen 38, die durch eine gewindefreie Fläche 39, von denen auch entsprechend zwei gegenüberliegende ausgebildet sind, unterbrochen sind. Die Fläche 39 erstreckt sich auf einem dem Gewindegrund des Gewindes 38 entsprechenden Durchmesser. Die Gewindeausformungen 38 oder sonstige Profilierungen, wie eingangs ausgeführt, sind bevorzugt ausgehend von einer zylindrischen Grundfläche gebildet. Weiter vorzugsweise ist ihre radial innere spitzenseitige Begrenzung auch durch eine Zylinderfläche gegeben. Gegebenenfalls mit Ausnahme einer endseitig der Ausformung gegebenen Abflachung oder Rundung, wie weiter noch erläutert.

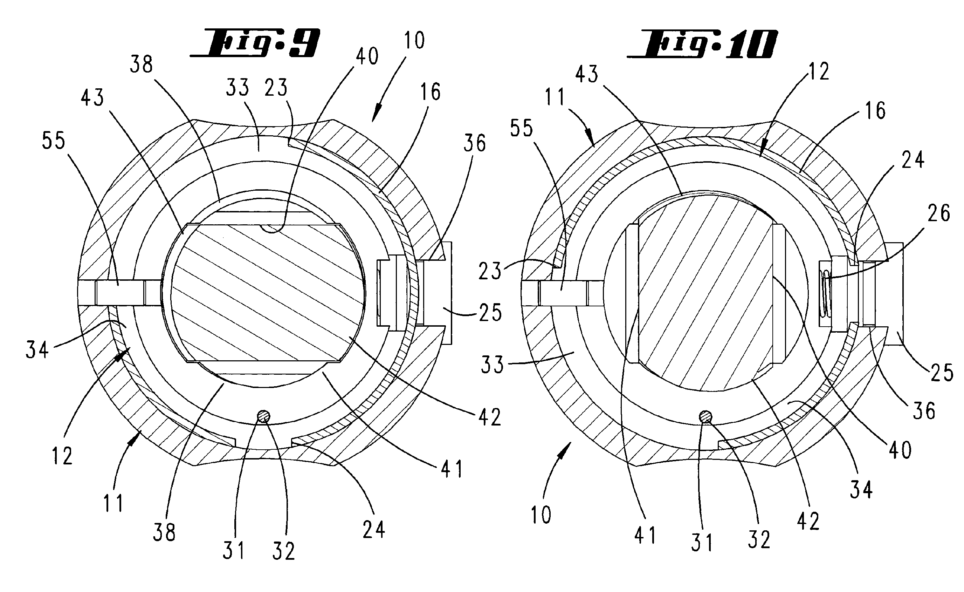

Der Bolzen 4 weist, wie sich insbesondere aus den Fig. 9 und 10 ergibt, einen im Wesentlichen rechteckigen Querschnitt auf mit zwei gegenüberliegenden, profilierungsfreien Seiten 40, 41 und zwei profilierten, beim Ausführungsbeispiel Gewindeausformungen aufweisenden Seiten 42, 43. Während die Seiten 40, 41 im Querschnitt geradverlaufend ausgebildet sind, sind die mit Gewinde versehenen Seiten 42, 43 in ihrer Kontur einer Kreislinie folgend ausgebildet.

Die Profilierungen des Bolzens bzw. der Mutter, speziell die Gewindeausformungen, sind einander ergänzend ausgebildet. Die Maße sind so gewählt, dass ein unmittelbares Ineinandergreifen, im Sinne von Gewinde und Gegengewinde, ermöglicht ist.

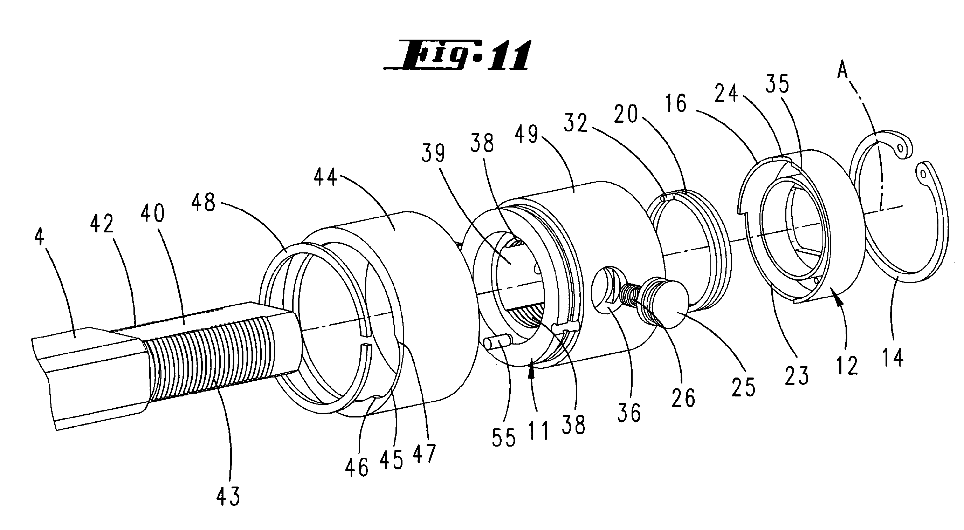

Mit Bezug zu Fig.11 ist eine weitere Ausführungsform dargestellt.

Diese weitere Ausführungsform unterscheidet sich von der zuvor beschriebenen Ausführungsform insbesondere durch eine auf dem ersten Teil weiter angeordnete Drehhülse 44. Diese Drehhülse 44 ermöglicht eine Sicherung in der Verdrehstellung der Mutter durch Verdrehen der Drehhülse in eine Raststellung. In der Raststellung kann, insofern übereinstimmend mit der zuvor beschriebenen Ausführungsform, das nunmehr innerhalb der Verdrehhülse 44 angeordnete Löseteil 25 nach außen verfahren, auch hier unter Wirkung der Feder 26 und so die Verdrehstellung in gleicher Weise sichern wie bei der vorbeschriebenen Ausführungsform.

Die Drehhülse 44 hat den Vorteil, dass die Mutter frei über ihren ganzen Umfang zum Versetzen aus der Lösestellung in die Verdrehstellung angefasst werden kann.

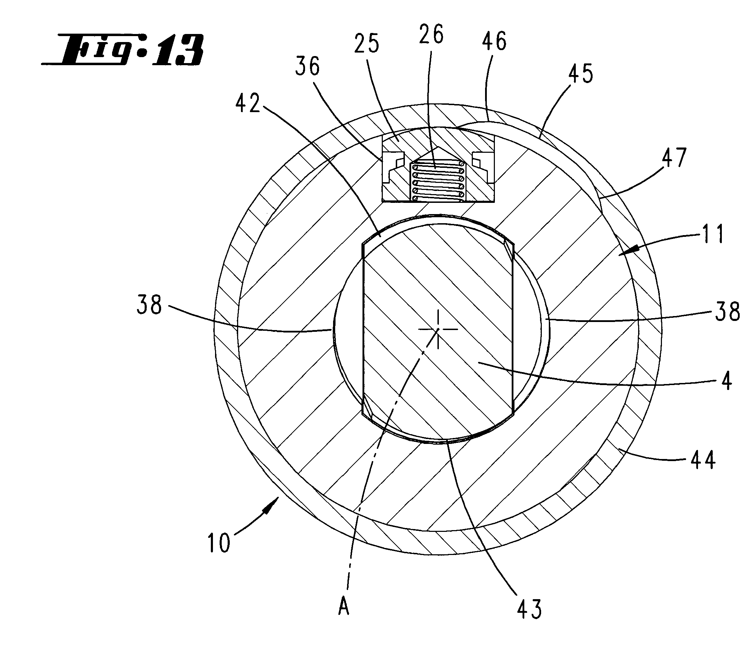

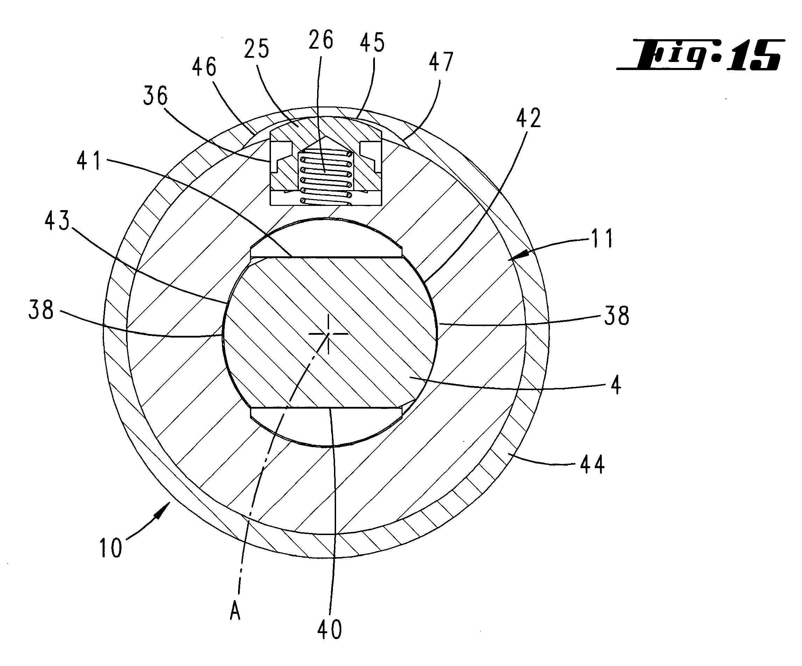

Die Drehhülse 44 weist innenseitig eine Ausnehmung 45 auf, die beim Ausführungsbeispiel im Sinne einer Wandungsverdünnung der Drehhülse 44 ausgeformt ist. Die Ausnehmung 45 weist im Querschnitt, also sich in Umfangsrichtung erstreckend, wie etwa aus Fig. 13 ersichtlich, abgerundete oder abgeschrägte Endbereiche 46, 47, auf, welche bei Verdrehung ein Niederdrücken des Löseteils 25 aus der Stellung gemäß Fig. 15 in die Stellung gemäß Fig. 13 ermöglichen.

Die Drehhülse 44 ist drehbar aber unverlierbar an dem ersten Teil 11 gesichert. Beim Ausführungsbeispiel durch einen Sprengring 48.

Weiter ist die Drehhülse bevorzugt nur winkelbegrenzt relativ zu dem ersten Teil 11 verdrehbar. Die Winkelbegrenzung kann beispielsweise durch einen Bolzen 49 erreicht sein, der teilweise in die Ausnehmung 45 vorsteht und hier mit der Abschrägung 46 oder 47 jeweils zusammenwirkt.

Im Übrigen sind gleiche Verhältnisse gegeben wie bei der erstbeschriebenen Ausführungsform.

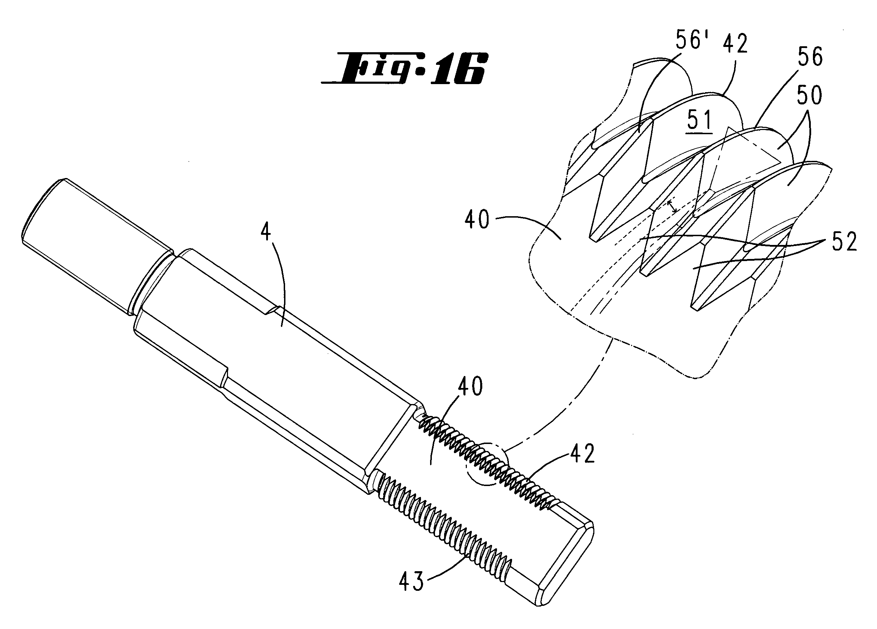

Bezüglich der Fig. 16 ist, vgl. auch die Lupendarstellung, eine Abflachung an einem Gewindegang oder grundsätzlich einer Profilierung, hier an dem Bolzen 4 aber auch, gestrichelt in der Lupendarstellung, an der Mutter, dargestellt. Die Abflachung dient zum leichteren Einpassen der Profilierungen ineinander beim Drehen in die Verriegelungsstellung. Wie ersichtlich ist eine Stirnfläche eines Gewindeganges 50 des Bolzens nicht entsprechend einer Radialen mit einer dann bezogen auf eine Umfangsrichtung senkrechten Fläche ausgebildet, sondern mit einer abgeflacht in das umgebende Material 51 einlaufenden Stirnfläche 52. Beim Ausführungsbeispiel weist das Gewinde auch eine Stirnkante oder Stirnfläche 53 auf. Diese Stirnkante 53 ist in einem Endabschnitt 54 schräg abfallend ausgebildet.

Bevorzugt ist bei der Mutter keine besondere Gestaltung vorgenommen oder nur eine entsprechend flache Stirnfläche52' vorgesehen. Gegebenenfalls kann aber auch hier ein abfallender Abschnitt 54' einer diesbezüglichen Stirnkante 53' vorgesehen sein.

Wesentlich ist, dass die Abmessungen immer so getroffen sind, dass sich noch eine deutliche Überdeckung a (mit schräg abfallendem Endabschnitt 54' bei der Mutter) bzw. b (ohne schräg abfallenden Abschnitt 54' bei der Mutter) zweischen den Stirnkanten der Gewinde ergibt.

## Patentansprüche

1. Mutter mit einem ersten Teil (11), das eine erste durchgehende (Offnung (O₁) aufweist, und mit einem zweiten Teil (12) mit einer zweiten, eine Öffnungskontur aufweisenden Öffnung (O₂), wobei die Teile (11, 12) um eine die Öffnungen (O₁, O₂) durchsetzende Drehachse (A) drehbar miteinander verbunden sind und die Öffnungen (O₁, O₂) zueinander in Überdeckung sind, wobei weiter die erste Öffnung (O₁) an ihrer Innenfläche eine sich in Umfangsrichtung erstreckende und in Umfangsrichtung unterbrochene Profilierung aufweist und die Öffnungskontur des zweiten Teils (12) unrund ist, **dadurch gekennzeichnet, dass** das zweite Teil (12) relativ zu dem ersten Teil (11) um die Drehachse (A) winkelbegrenzt zwischen einer Verdreh- und einer Lösestellung drehbar ist, die Teile in der Verdrehstellung formschlüssig zueinander gesichert sind und zur Aufhebung der Verdrehstellung auf ein die Verdrehung sicherndes Teil, beispielsweise einen Knopf, einzuwirken ist.

2. Mutter nach Anspruch 1, **dadurch gekennzeichnet, dass** die Teile (11, 12) in ihre Lösestellung vorgespannt sind.

3. Mutter nach einem der vorhergehenden Ansprüche, **dadurch gekennzeichnet, dass** die Erstreckung des zweiten Teils (12) in Richtung der Drehachse (A) kürzer ist als die Erstreckung des ersten Teils (11).

4. Mutter nach einem der vorhergehenden Ansprüche, **dadurch gekennzeichnet, dass** die Verdrehstellung verrastet ist.

5. Mutter nach Anspruch 4, **dadurch gekennzeichnet, dass** zur Lösung der Verrastungsstellung ein relativ zu dem ersten und/ oder zweiten Teil bewegliches Löseteil (25) vorgesehen ist.

6. Mutter nach Anspruch 5, **dadurch gekennzeichnet, dass** das Löseteil (25) quer zur Erstreckungsrichtung der Drehachse (A) oder durch Drehen um die Drehachse (A) zu betätigen ist.

7. Mutter nach einem der vorhergehenden Ansprüche, **dadurch gekennzeichnet, dass** die Profilierung in Form von einem oder mehreren Gewindegängen ausgebildet ist, vorzugsweise in Form eines Linksgewindes.

8. Kombination eines eine Querschnittsfläche aufweisenden Bolzens (4) mit einer Mutter (10), wobei die Mutter (10) die Merkmale eines oder mehrerer der Ansprüche 1 bis 7 aufweist, **dadurch gekennzeichnet, dass** über eine Länge des Bolzens (4) die Querschnittsfläche des Bolzens (4) zumindest teilweise eine Kontur aufweist, die mit der Öffnungskontur der zweiten Öffnung (O₂) derart übereinstimmt, dass der Bolzen (4) in die zweite Öffnung (O₂) einführbar ist aber nicht darin drehbar ist und dass der Bolzen (4) zunächst, in Aufsetzrichtung der Mutter, einen Einführabschnitt aufweist, der frei von Profilierungen ist, wobei die axiale Erstreckung dieses Einführabschnittes an die axiale Erstreckung des zweiten Teils angepasst ist.

## Claims

1. Nut having a first part (11) which has a first through opening (O₁), and having a second part (12) which has a second opening (O₂) having an opening contour, the parts (11, 12) being connected to one another so as to be rotatable relative to one another about a rotational axis (A) which passes through the openings (O₁, O₂), and the openings (O₁, O₂) being aligned with one another, in addition the first opening (O₁) on its inner face having a profile which extends in the peripheral direction and which is interrupted in the peripheral direction, and the opening contour of the second part (12) being non-circular, **characterized in that** the second part (12) is rotatable relative to the first part (11) about the axis of rotation (A) in a limited angular range between a twisted position and and an untightened position, the parts are secured to one another in the twisted position in a positive-fit manner, and action takes place on a part that secures the twisting, for example a knob, in order to discontinue the twisted position.

2. Nut according to Claim 1, **characterized in that** the parts (11, 12) are preloaded into their untightened position.

3. Nut according to either of the preceding claims, **characterized in that** the extent of the second part (12) in the direction of the rotational axis (A) is shorter than the extent of the first part (11).

4. Nut according to any of the preceding claims, **characterized in that** the twisted position is detent-locked.

5. Nut according to Claim 4, **characterized in that** a release part (25) which is movable relative to the first and/or second part is provided for releasing the locked position.

6. Nut according to Claim 5, **characterized in that** the release part (25) is activated transversely with respect to the direction of extent of the rotational axis (A), or by rotation about the rotational axis (A).

7. Nut according to any of the preceding claims, **characterized in that** the profile is provided in the form of one or a plurality of thread turns, preferably in the form of a left-hand thread.

8. Combination of a bolt (4) having a cross-sectional area with a nut (10), the nut (10), the nut (10) having the features of one or more of Claims 1 to 7, **characterized in that** the cross-sectional area of the bolt (4) has, at least in places, a contour over the length of the bolt (4) which matches the opening contour of the second opening (O₂) in such a way that the bolt (4) is insertable into the second opening (O₂) but is not rotatable therein, and that the bolt (4) has initially, in the direction in which the nut is fitted, an insertion portion which is profile-free, the axial extent of this insertion portion being adapted to the axial extent of the second part.

## Revendications

1. Ecrou avec une première pièce (11) présentant une première ouverture traversante (O1) et avec une deuxième pièce (12) présentant une deuxième ouverture (02) ayant un contour d'ouverture, dans lequel les pièces (11, 12) sont liées entre elles de manière pivotante autour d'un axe de rotation (A) traversant les ouvertures (O1, 02) et les ouvertures (O1, 02) sont en recouvrement mutuels, dans lequel en outre la première ouverture (O1) présente à sa surface intérieure un profilage qui s'étend en direction circonférentielle et qui est interrompu en direction circonférentielle et le contour d'ouverture de la deuxième pièce (12) est ovale, **caractérisé en ce que** la deuxième pièce (12) a la possibilité de tourner par rapport à la première pièce (11) autour de l'axe de rotation (A) de manière angulairement limitée entre une position de vissage et une position déverrouillée, les pièces étant solidarisées par appariement de forme dans la position de vissage et une action sur une pièce assurant le vissage, par exemple un bouton, est requise pour neutraliser la position de vissage.

2. Ecrou selon la revendication 1, **caractérisé en ce que** les pièces (11, 12) sont précontraintes dans la position déverouillée.

3. Ecrou selon l'une des revendications précédentes, **caractérisé en ce que** la deuxième pièce (12) est plus courte suivant la direction de l'axe de rotation (A) que la première pièce (11).

4. Ecrou selon l'une des revendications précédentes, **caractérisé en ce que** la position de vissage est verrouillée.

5. Ecrou selon la revendication 4, **caractérisé en ce qu'**il est prévu une pièce de déverrouillage (25) mobile par rapport à la première et/ou deuxième pièce pour neutraliser la position de verrouillage.

6. Ecrou selon la revendication 5, **caractérisé en ce que** la pièce de déverrouillage (25) est prévu pour être actionnée transversalement par rapport à la direction d'extension de l'axe de rotation (A) ou par rotation autour de l'axe de rotation (A).

7. Ecrou selon l'une des revendications précédentes, **caractérisé en ce que** le profilage est formé par un ou plusieurs pas de vis, de préférence sous la forme d'un filetage à gauche.

8. Combinaison d'un goujon (4) présentant une surface de section transversale avec un écrou (10), dans laquelle l'écrou (10) présente les caractéristiques d'une ou plusieurs des revendications 1 à 7, **caractérisée en ce que** sur une longueur du goujon (4), la surface de section transversale du goujon (4) présente au moins en partie un contour correspondant au contour d'ouverture de la deuxième ouverture (02) de manière à ce que le goujon (4) soit insérable, mais sans pouvoir y tourner, dans la deuxième ouverture (02) et que le goujon (4) présente ensuite, dans la direction de montage de l'écrou, une partie d'insertion dépourvue de profilage, dans laquelle la longueur axiale de cette partie d'insertion est adaptée à la longueur axiale de la deuxième pièce.
